# EUROPEAN PATENT SPECIFICATION

(11) **EP 3 103 039 B1**
(45) Date of publication and mention of the grant of the patent: **10.04.2019**
(21) Application number: 15752524.7
(22) Date of filing: 24.02.2015
(51) Int. Cl.: G06F 17/30

(54) **SYSTEM AND METHOD FOR AN EFFICIENT DATABASE STORAGE MODEL BASED ON SPARSE FILES**
SYSTEM UND VERFAHREN FÜR EIN EFFIZIENTES DATENBANKSPEICHERUNGSMODELL BASIEREND AUF DATEIEN MIT GERINGER DICHTE
SYSTÈME ET PROCÉDÉ ASSOCIÉS À UN MODÈLE DE MÉMORISATION DE BASE DE DONNÉES EFFICACE BASÉ SUR DES FICHIERS ÉPARS

(30) Priority: 20.02.2014 US 201414185516
(43) Date of publication of application: 14.12.2016
(73) Proprietor: Huawei Technologies Co., Ltd., Longgang District Shenzhen, Guangdong 518129 (CN)
(72) Inventor: HEBERT, Jacques Earl, Los Gatos, CA 95033 (US); VARAKUR, Gangavara Prasad, Danville, CA 94526 (US)
(74) Representative: Pfenning, Meinig & Partner mbB
(86) International application number: PCT/CN2015/073244
(87) International publication number: WO 2015/124117

(56) References cited:
- CN-A- 102 402 617
- CN-A- 103 314 377
- US-A1- 2004 267 828
- US-A1- 2010 250 493
- US-A1- 2011 153 373
- US-A1- 2012 179 698

## Description

### TECHNICAL FIELD

The present invention relates generally to database systems, and, in particular embodiments, to a system and method for an efficient database storage model based on sparse files.

### BACKGROUND

Traditional database servers use one or more file system files to store each database object. Alternatively, some models build entire storage management on top of raw-disk storage. Both approaches have advantages and disadvantages. For a large database management system (DBMS) which stores many database (DB) objects, for example in the range of few hundreds of thousands to few millions, the former model tends to lose performance significantly or lead to thrashing. The latter approach requires substantial development effort (in time and resources) to build, implement, and stabilize the database storage layer. Both approaches are able to segregate the entire available storage into database object specific areas and shared metadata areas, for efficient and organized access of the data in the database objects. Databases that use individual files to represent each database object (e.g., table, index, trigger) may require thousands of files to represent a typical database, and potentially millions of files to represent a substantially large massively parallel processing (MPP) database. Managing such a large set of individual files and especially metadata intensive operations of concurrently creating and deleting the files is not likely to perform well especially in a distributed clustered file system environment. There is a need for an improved database storage model that resolves such issues.

US2004/267828A1 proposes a database view of a database is created which provides a transaction-consistent view of an existing database at a previous time. Each database view contains all the information needed to, along with the primary database, determine the contents of the primary database at a previous time. The database view consists of a side file corresponding to each data file in the primary database.

### SUMMARY OF THE INVENTION

In accordance with an embodiment, a method includes a method by a database system engine for database storage operations includes pre-allocating, in a logical sparse file, a plurality of segments fixed in size and contiguous at fixed offsets, wherein the segment is fixed sized contiguous logical address ranges within a collection file, each segment starts at an offset that is a multiple of the segment size, which is configurable and fixed for a collection file, and the collection file is a sparse file that can contain the data for multiple tables, indexes, triggers, and/or other database objects. Upon receiving a command to write database objects to the segments, the database objects are mapped to the segments in a database catalog, the database catalog is a collection catalog, and the collection catalog is a system maintained catalog that contains metadata information for managing the collection file, and the database objects are mapped in the database catalog to the segments using indices indicating object IDs of the database objects and object segment indices in relation to the object IDs in the database catalog. The method further includes interfacing with a file system to initialize storage medium space of the collection file for writing the database objects to the segments at the fixed offsets; and writing the database objects to the segments at the fixed offsets.

In accordance with an aspect not forming part of the invention, a method by a database system engine for database storage operations includes provisioning a collection file including a plurality of segments having a fixed size and separated by fixed offsets, and adding a collection file object ID (COID) for the collection file in an entry of a tablespace catalog. For each one of the segments of the collection file, an object ID (OID) and an object segment index (OSEG) are initialized in an entry in a collection catalog. The method further includes adding, to the entry in the collection catalog, the COID and a collection segment index indicating a location of the segment in the collection file.

In accordance with yet another embodiment, a management component for database storage operations comprises at least one processor and a non-transitory computer readable storage medium storing programming for execution by the at least one processor. The programming includes instructions to pre-allocate, in a logical sparse file, a plurality of segments fixed in size and contiguous at fixed offsets, wherein the segment is fixed sized contiguous logical address ranges within a collection file, each segment starts at an offset that is a multiple of the segment size, which is configurable and fixed for a collection file, and the collection file is a sparse file that can contain the data for multiple tables, indexes, triggers, and/or other database objects. The programming includes further instructions to, receive a command to write database objects to the segments, and map the database objects to the segments in a database catalog, wherein the database catalog is a collection catalog, and the collection catalog is a system maintained catalog that contains metadata information for managing the collection file, wherein the instructions to map the database objects to the segments in the database catalog include instruction to add, in the database catalog, indices indicating object IDs of the database objects and object segment indices in relation to the object IDs in the logical sparse file. The management component is further configured to interface with a file system component to initialize storage medium space of the collection file for writing the database objects to the segments at the fixed offsets; and writing the database objects to the segments at the fixed offsets.

The foregoing has outlined rather broadly the features of an embodiment of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates an embodiment of a database collection file tablespace;
Figure 2 illustrates an embodiment of a mapping of segments and subsegments to database objects managed by the database.
Figure 3 illustrates an embodiment of a method for creating a database system catalog to manage storage segments;
Figure 4 illustrates an embodiment of a method to assign database segments and allocate disk space to database objects;
Figure 5 illustrates an embodiment of a method for freeing database storage segments and de-allocating disk space; and
Figure 6 is a diagram of an exemplary processing system that can be used to implement various embodiments.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

Embodiments are provided herein for an efficient database storage model, which utilizes sparse file features to efficiently store and retrieve data. The embodiments provide database algorithms that utilize the file system abstraction layer to hide the complexity of managing disk space while providing the database a linear and contiguous logical address space for holding multiple database objects. The backing storage space is sparsely allocated on-demand. The embodiments make use of a soft or "thin" provisioning (described below) provided by file system sparse files to efficiently store database objects, while avoiding the disadvantages of having the file system manage a substantially large number of files. The database storage layer provides a catalog (table) mapping database objects to a fixed sized contiguous logical address range provided by the file system. The file system is relegated to simply providing a logically contiguous and thinly provisioned address space which is divided by the database into segments mapped to database objects. The database storage layer employs relatively simple methods for using logical "segments" of fixed size located at fixed offsets in large sparse files to hold a large number (e.g., thousands) of database objects. Each database object can grow independently within a single thinly provisioned contiguous address space. Using sparse files and changing the dividing line between the database storage layer and file system can potentially be applied to any suitable database. The underlying system storage may or may not be a conventional file system, and can be any interface that provides a thinly provisioned contiguous address space.

A sparse file is an abstraction type of file provided by the underlying file system. The sparse file provides a relatively large virtual address space, free space management, non-contiguous use of address space, and metadata maintenance with reliable performance and scalability. The sparse file utilizes only the allocated/initialized space within the file rather than the entire address space for the file. For example, a sparse file can be created to have an address space of 1 terabyte (TB), but comprises only 44 kilo byte (KB) of allocated/initialized data starting at address 0 and another 100 KB of data starting at address 0xffff (or 64K). Thus, this sparse file utilizes only 144 KB, in addition to few additional bytes for the file metadata, from the entire 1 TB space.

Typically, a file provides a single contiguous address space. In file systems that provide support for files exceeding 4 TB, objects that may grow to 1 gigabyte (GB) in size can be represented by spacing the objects 1GB apart within the file, for instance pre-allocating 10 GB for 10 segments. This approach may waste a substantial amount of disk space. For the objects that never approach 1 GB in size, allocating such space is wasteful. A sparse file provides a single contiguous address space and initially contains unallocated/uninitialized space regions. Modern file systems that support sparse files (e.g., Ext4, XFS, Btrfs, and NTFS) can provide system interfaces that allow directly pre-allocating regions in a file, without initializing the space (for actual data use). Such systems may also allow de-allocating an unused region of a file that had been written previously. These file systems provide multiple states for the data: unallocated, allocated and uninitialized, and allocated and initialized. Further, some file systems provide "thinly" provisioned sparse files. This means that such systems do not allocate disk space to a file until data is written to it. Any of the systems above can be used to provide the sparse files.

Using a modern file system, such as Ext4, each object can be located at fixed logical address intervals apart, while leaving the unused portion between the objects uninitialized. This allows the contiguous address space for each of the objects to grow in the logical address space unimpeded by other objects of the file, without wasting disk space. The underlying file system manages the free space from the disk transparently, providing extents from the disk to back the objects when they are written. When the data within an object is no longer needed, the disk space can be returned to the file system free space via a system call and the file system allocator can then reuse the unneeded disk space to extend other objects. Using sparse files this way for database files allows putting multiple database objects within a single file without incurring the cost of creating and managing files for each object. File system metadata may be only updated to reflect pages appended and removed when tables/indexes are added/dropped or extended/reduced. As such, many (e.g., thousands) of tables/indexes can be represented in a single file. The database can easily and efficiently map the objects to the contiguous ranges in the file using a catalog.

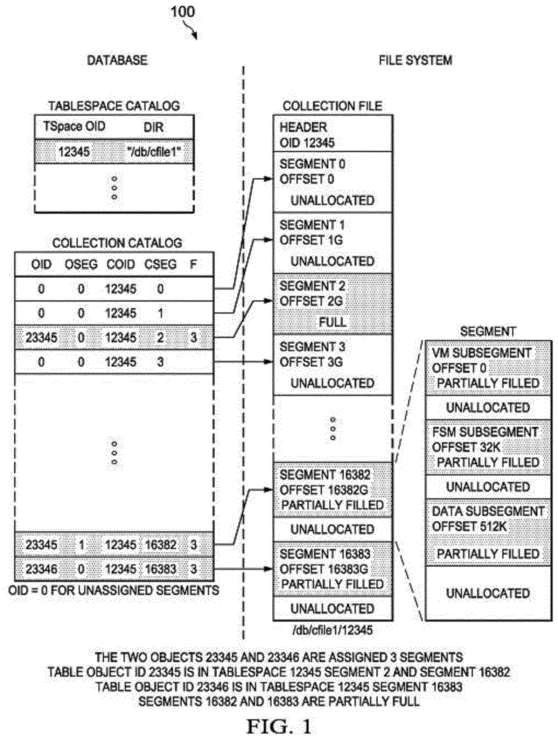

Figure 1 illustrates a collection file tablespace 100 with fixed sized segments and subsegments located at fixed offsets in a logically contiguous address space. A collection file is a sparse file that can contain the data for multiple tables, indexes, triggers, and/or other database objects. In traditional database terminology, this can be considered as a tablespace which holds a plurality of related database objects together in the same storage container (e.g., a file, a file system, a volume, or a disk). The tablespace is part of the metadata, and is described by entries in an internal catalog table. The collection file size is limited by the file system it resides on, and multiple collection files can be specified when it is necessary to locate specific tables/indexes on particular devices, or for large databases. The collection file can contain a header that indicates the purpose of the file, but there is no metadata within a collection file that describes its layout. Unused segments and subsegments contained in the file are not initialized prior to their use. Segments and subsegments may only become present when they are written. The metadata that describes the layout of the collection file(s) is located in the database collection catalog.

The collection catalog is a system maintained catalog (e.g., a persistent table or data-structure) that contains various metadata information required to manage the collection files and their assignment/allocation to various database objects. For instance, the collection catalog contains the collection file name and offset for the segments of every table/index object in the database. The catalog is maintained on non-volatile storage while providing consistency, durability, and ACID (Atomicity, Consistency, Isolation, Durability) semantics of a proper relational DBMS. Each row of the catalog describes a mapping of one object ID (OID) table/index segment to a collection file segment. The collection catalog is indexed by the object ID and object segment index columns.

The columns of the collection catalog correspond to the object ID (OID), object segment index (OSEG), collection filename (CFILE), collection file segment index (CSEG), and segment format (FMT). When a segment for a table or object is created in a collection file, a tablespace entry is added to the collection catalog for the OID and OSEG with its associated CFILE, CSEG, and collection file segment FMT values. The OSEG is the index of a segment in relation (list of segments) for the object. The OSEG ranges from 0 to the index of the last segment in the relation. The OID and OSEG columns are indexed to allow quick lookup of an OID and OSEG pair, or to quickly find unused (e.g., OID=0 and OSEG=0) segments in the collection catalog. The collection file (CFILE) and collection file segment index (CSEG) define the location of the segment. The CFILE is the object ID of the collection file, also referred to as a collection file object ID (COID). The CSEG is the index of the segment in the collection file. The FMT is an integer value that describes the segment contents. For instance, in this example the default FMT=0 indicates that the segment contains data only, FMT=1 is used to indicate that the segment contains only initialization data, FMT=2 indicates that the segment contains data and a free space map, and FMT=3 indicates that the segment contains data, free space map, and the visibility map.

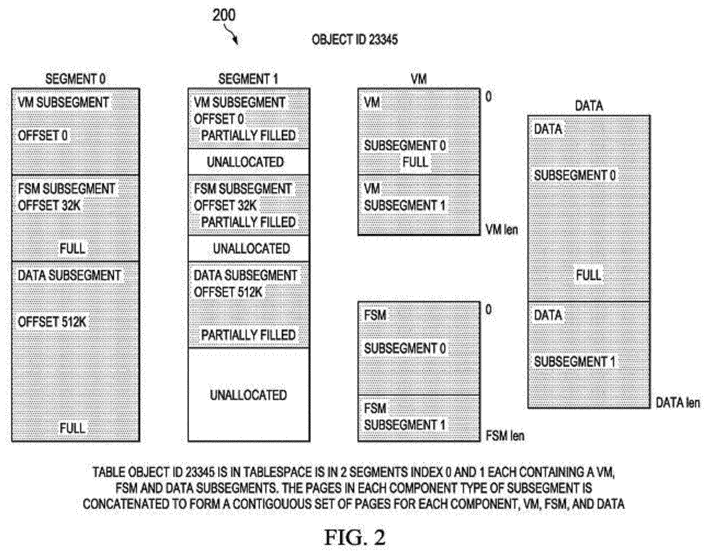

Figure 2 illustrates an embodiment of a mapping approach 200 of segments and subsegments to database objects managed by the database. A segment is a fixed sized contiguous logical address range within a collection file. Each segment starts at an offset that is a multiple of the segment size, which is configurable and fixed for a collection file. For instance, a 16 TB collection file with 1 GB segments contains segments beginning at each multiple of 1 GB in the file. The segments in the collection file are sequentially numbered from 0 to 16383 (16 TB/1G). Collection files are sparsely allocated, which means that the disk space is only allocated as the segments are populated. Segments are divided into fixed size pages for allocation purposes. A page is a configurable size in bytes (such as 8 KB) which is the minimum amount of space allocated for data within a segment.

The database manages the space associated with a database object by managing logically fixed sized segments at fixed logical offsets. The database maps these segments onto offsets in sparse files, and the mappings are stored in database metadata catalog. The list of segments for a given object are sequentially numbered, starting from 0. When the object grows to fill a segment, an available segment in the collection file is assigned to the object and is given the next sequential object segment index (OSEG). When the segment in the collection file is assigned, the corresponding logical address range is reserved but the disk space is not allocated. The file system allocates real disk space for a segment later when data is written to the object.

Mapping the segments on fixed logical address boundaries allows the files to grow to their full potential size within the logical address space without overlapping with the next segment in the collection file. The database does not need to chain logical address ranges to form a segment because a segment may not grow larger than the slot assigned for the segment. The allocated data within a segment need not fill the entire logical address range available to it. However, the unwritten space between the end of data in one segment to the start of the next segment is not wasted because it is unallocated (on the disk or storage medium). The underlying file system handles allocating the disjoint physical disk space for the segments behind the scenes, without the knowledge or participation of the database system, which substantially simplifies the database implementation.

A subsegment is a contiguous address range that is a subset of the pages within a segment. Subsegments can be used as special purpose database metadata areas residing within a segment. For example, the free pages within a segment is maintained in a free-space-map subsegment (FSM). Every object can have two subsegments, one for the data and another for FSM. Some objects may have additional subsegments for different object-specific purposes. For example, a table object may contain an initialization subsegment (init-subsegment) to provide initialization data for tables, or a visibility subsegment to indicate which parts of the table data (rows) are visible or not-visible to user transactions. The size of the metadata subsegments is pre-determined to be sufficient to represent the maximum data within the segment. Each type of metadata subsegment has a designated fixed location and size within a segment.

As in the case of segments, the fixed size and location of the metadata subsegments within the segments simplify managing the disk space for the subsegments. No disk space is wasted when the subsegments are not filled because space may only be allocated by the file system when it is used. As the data for an object grows, additional segments are added by the database, each containing additional space for the data and metadata subsegments required by the additional data subsegment. For instance, for a table object, with 8 KB pages and 1GB segments, no more than 4 pages are required for the visibility subsegment and approximately 32 pages for the FSM subsegment. No more than 64 pages is necessary in any segment to hold both subsegments. Thus, in each 1GB segment, the first 4 pages (32 KB) are reserved for the visibility subsegments and 60 pages (32 KB up to 512 KB) are reserved for the FSM subsegment. The remaining 131008 (1GB - 512 KB) pages in the segment are reserved for the data. The disk space required for some metadata subsegments, such as the init-subsegments (for initialization data), may not be predetermined either in total or on the basis of what is required for a single segment. These subsegments are stored in their own segments, and their segment allocation is managed in the collection catalog similar to the other segments.

No pre-formatting required for a collection file. The filename and attributes of the collection file tablespace are stored in the database tablespace catalog. The database metadata that describes the segment boundaries within the collection files and the objects they are assigned to are stored in the database collection catalog. Initially, the segments in the collection catalog are unused (assigned to object ID=0). The collection catalog is created when the first collection file is created.

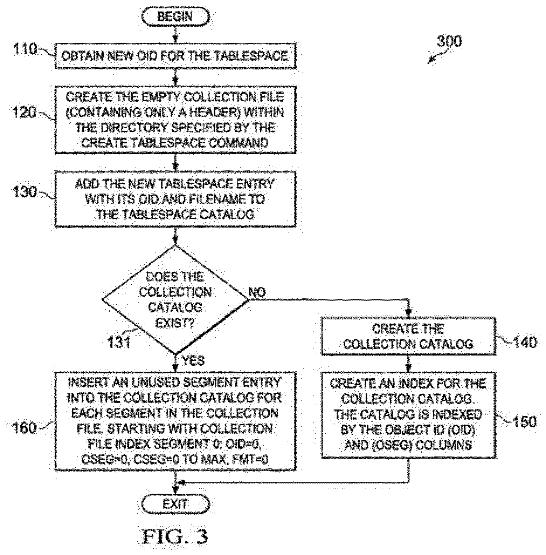

Figure 3 illustrates an embodiment of a method 300 for creating a database system catalog to manage storage segments. At step 110, the method 300 begins by obtaining a new OID for the tablespace. A collection file can be added to the database using a "CREATE TABLESPACE" command. At step 120, an empty collection file (e.g., containing only a header) is created within the directory specified by the CREATE TABLESPACE command. A collection file header is also written to the file. At step 130, an entry including the name of the new tablespace and its object ID is added to the database tablespace catalog. At step 131, the method 300 determines whether the collection catalog exists. If the collection catalog exists, the method 300 proceeds to step 160. Otherwise, at step 140, a collection catalog (e.g., a database system table) is created. At step 150, an index is created for the collection catalog. The collection catalog is indexed by the object id (OID) and object segment index (OSEG) columns. At step 160, unused segment entries are added (starting with OID=0, OSEG=0, CSEG=0 to max, FMT=0) into the collection catalog for each segment offset in the logical address range of the collection file.

When a collection file is added to the database, entries for all the unused segments in the collection file are added to the collection catalog. For example, to add a collection file with a maximum size of 16 TB and segment size of 1 GB, 16K segment entries are added to the collection catalog file. The added segments are unused, and they are assigned an object ID of 0 and object segment index (OSEG) of 0. The collection file object ID and collection file offset for each segment is set to refer to each of the available segments in the collection file. No disk space is allocated in the collection file when the collection file tablespace is added to the database. Only the descriptions of the available segments may be added to the collection catalog. Disk space may be allocated only when pages are written to the collection file. The subsegments are predefined ranges of contiguous pages within the segments. They are not instantiated until they are written. No disk space is allocated to the subsegments until they are used. Maintaining the mapping of unused segments along with the allocated ones in the catalog is one possible implementation. Other implementations may also be used. For instance, in another implementation, entries for unused segments are not needed and not in the collection catalog. However, the database catalog keeps track of the allocated segments.

Segments are assigned to an object to hold the data and metadata when a page is written to a data subsegment page offset on a segment that is not yet assigned. Assigning a new segment to a table/index relation requires finding the first unused segment for the collection file in the collection file catalog. Since all the segments are the same fixed size, at fixed locations, assigning a new segment is simple because there is no need to search for a proper size slot. The database may only need to keep track of the location and index of the segments in the relation. Offsets into the logically contiguous address space are simple calculations with the variables being the page offset and segment location. The underlying file system transparently allocates the backing disk space when previously unwritten disk pages are written. The file system does the work of providing the contiguous logical pages for the segments and manages the disjoint physical disk extents.

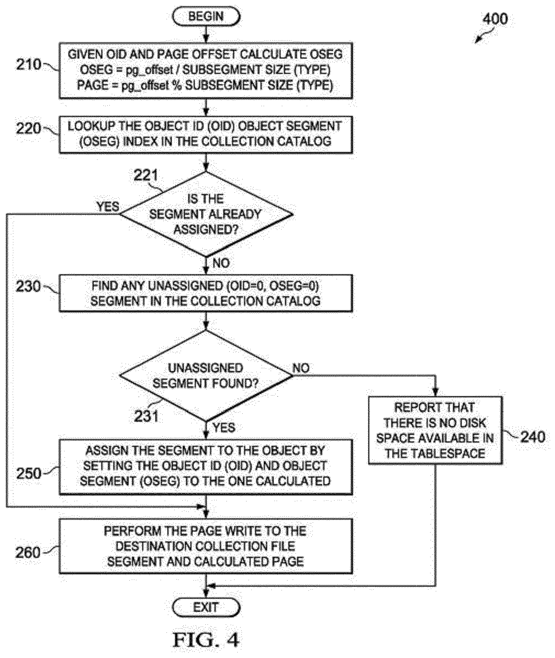

Figure 4 illustrates an embodiment of a method 400 to assign database segments and allocate disk space to database objects. The method 400 can be used to write a page to a particular offset in an object relation. At step 210, the object segment index (OSEG) is calculated by dividing the object offset by the subsegment size. The page within the segment is calculated as the object offset modulo (%) the subsegment size. At step 220, the method 400 performs a lookup of the object ID and object segment index pair in the collection catalog. At step 221, the method 400 determines whether the segment is already assigned. If the segment is already assigned, then the method 400 proceeds to step 260. Otherwise, at step 130, the method attempts to find any unassigned segment (with OID= 0, OSEG=0) in the collection catalog. At step 231, the method 300 checks if an unassigned segment is found. If this is not true, then the method 400 reports that there is no disk space available in the tablespace at step 240, and the method 400 then proceeds to step 260. However, if an unassigned segment is found, then at step 250 the segment is assigned to the object by setting the object ID and calculated object segment index. At step 260, the method 400 performs the page write to the destination collection file segment and calculated page. If the new page was never written before, the file system automatically allocates the space required to extend the segment contents to hold the new page. If the page already existed, the file system writes on the page at the offset indicated. The database system does not have to invoke any special system calls to write the file. If the actual write to disk fails, the method fails the write and its associated transaction.

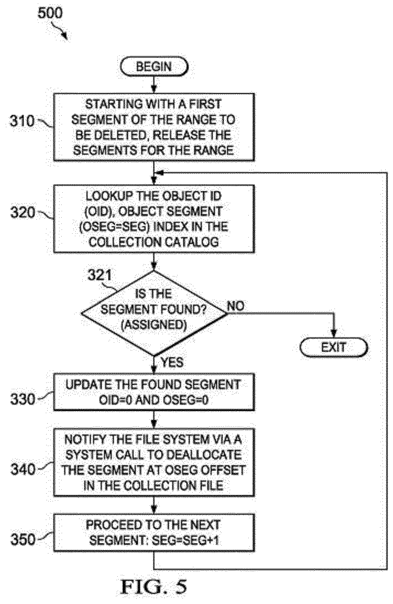

When a table, index, or other database object is dropped from the database or reduced in size, the unused segment(s) are disassociated from the relation for the object. Figure 5 illustrates an embodiment of a method 500 for freeing database storage segments and de-allocating disk space for a table. At step 310, the method, starting with a first segment of the range to be deleted, releases (in the collection file) segments associated with an object with a given object ID. At step 320, the method 500 performs a lookup if the object ID and object segment index in the collection catalog. At step 321, the method 500 checks if the segment is found. If the segment is not found, then the method 500 ends. If the segment is found, then the segment is updated or freed by setting both the object ID and object segment index to 0 at step 330. At step 340, the method 500 (or the database system) notifies the underlying file system via a system call to de-allocate the segment at CSEG offset in the collection file. The file system may then free the underlying disk space. The file system reports zeros to any reads directed to the segment and may allocate the disk space on demand as other segments are written. Thus, there is no need to clear the data in the segment. At step 350, the method 500 proceeds to the next segment (if found) to be freed, and returns to step 320.

The methods above can be implemented by a database storage engine of the DBMS interfacing between the database system and the host or file system. The engine may be an application programming interface (API) at the DBMS configured to create, read, update, and delete data in the database, as described in the methods above. In an embodiment, the database metadata maintained in the database catalogs are updated using ACID transactions, so that consistency/recovery is automatically achieved. The database metadata and data written into the object segments and subsegments residing in the collection file are also updated via ACID transactions and automatically recovered. A journaling or logging file system can be employed to maintain the integrity of the file system metadata. The file system metadata mapping the logically contiguous segments to disjoint physical disk extents can be updated through ACID transactions and automatically recovered. Since the integrity of the database data and metadata are protected by the database transactions when operating on them, there is no need for the file system to recover the data. However, the file system may need to ensure that the file system metadata is consistent upon database recovery. The file system metadata is recovered first when the file systems are mounted prior to database restart and recovery.

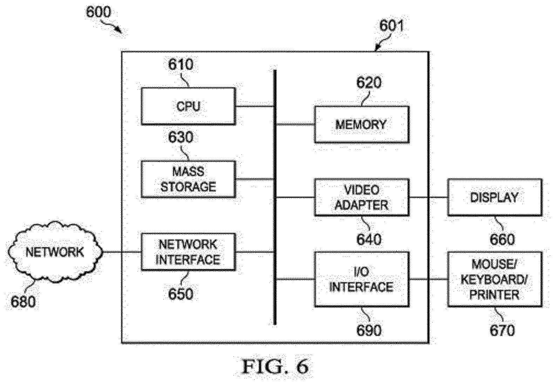

Figure 6 is a block diagram of an exemplary processing system 600 that can be used to implement various embodiments. The processing system may be part of or correspond to a mobile r personal user device, such as a smartphone. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 600 may comprise a processing unit 601 equipped with one or more input/output devices, such as a speaker, microphone, mouse, touchscreen, keypad, keyboard, printer, display, and the like. The processing unit 601 may include a central processing unit (CPU) 610, a memory 620, a mass storage device 630, a video adapter 640, and an Input/Output (I/O) interface 690 connected to a bus. The bus may be one or more of any type of several bus architectures including a memory bus or memory controller, a peripheral bus, a video bus, or the like.

The CPU 610 may comprise any type of electronic data processor. The memory 620 may comprise any type of system memory such as static random access memory (SRAM), dynamic random access memory (DRAM), synchronous DRAM (SDRAM), read-only memory (ROM), a combination thereof, or the like. In an embodiment, the memory 620 may include ROM for use at boot-up, and DRAM for program and data storage for use while executing programs. The mass storage device 630 may comprise any type of storage device configured to store data, programs, and other information and to make the data, programs, and other information accessible via the bus. The mass storage device 630 may comprise, for example, one or more of a solid state drive, hard disk drive, a magnetic disk drive, an optical disk drive, or the like.

The video adapter 640 and the I/O interface 690 provide interfaces to couple external input and output devices to the processing unit. As illustrated, examples of input and output devices include a display 660 coupled to the video adapter 640 and any combination of mouse/keyboard/printer 670 coupled to the I/O interface 690. Other devices may be coupled to the processing unit 601, and additional or fewer interface cards may be utilized. For example, a serial interface card (not shown) may be used to provide a serial interface for a printer.

The processing unit 601 also includes one or more network interfaces 650, which may comprise wired links, such as an Ethernet cable or the like, and/or wireless links to access nodes or one or more networks 680. The network interface 650 allows the processing unit 601 to communicate with remote units via the networks 680. For example, the network interface 650 may provide wireless communication via one or more transmitters/transmit antennas and one or more receivers/receive antennas. In an embodiment, the processing unit 601 is coupled to a local-area network or a wide-area network for data processing and communications with remote devices, such as other processing units, the Internet, remote storage facilities, or the like.

While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise.

## Claims

1. A method by a database system engine for database storage operations, the method comprising:
pre-allocating, in a logical sparse file, a plurality of segments fixed in size and contiguous at fixed offsets, wherein the segments are fixed sized contiguous logical address ranges within a collection file, each segment starts at an offset that is a multiple of the segment size, which is configurable and fixed for the collection file, and the collection file is a sparse file that can contain the data for multiple tables, indexes, triggers, and/or other database objects;
receiving a command to write database objects to the segments;
mapping the database objects to the segments in a database catalog, wherein the database catalog is a collection catalog, and the collection catalog is a system maintained catalog that contains metadata information for managing the collection file, and the database objects are mapped in the database catalog to the segments using indices indicating object IDs of the database objects and object segment indices in relation to the object IDs in the database catalog;
interfacing with a file system to initialize storage medium space of the collection file for writing the database objects to the segments at the fixed offsets; and
writing the database objects to the segments at the fixed offsets.

2. The method of claim 1, wherein the segments are pre-allocated in the logical sparse file without initializing the storage medium space for the segments.

3. The method of claim 2 further comprising upon a command to delete the database objects or free the segments, initializing to zero the indices indicating the object IDs and the object segment indices.

4. The method of claim 1, wherein the segments are larger in size than the database objects, and wherein the database objects start at the fixed offsets of the segments in the logical sparse file.

5. The method of claim 1, wherein the database system engine is an application programming interface that interacts with the file system for managing storage medium operations for the logical sparse file.

6. The method of claim 1 further comprising upon receiving a command to write the database objects to the segments, initializing, at a file system engine, storage medium space for writing the data objects to segments starting at the fixed offsets.

7. A management component for database storage operations, the management component comprising:
at least one processor; and
a non-transitory computer readable storage medium storing programming for execution by the at least one processor, the programming including instructions that, when executed by the processor, make it:
pre-allocate, in a logical sparse file, a plurality of segments fixed in size and contiguous at fixed offsets wherein the segments are fixed sized contiguous logical address ranges within a collection file, each segment starts at an offset that is a multiple of the segment size, which is configurable and fixed for the collection file and the collection file is a sparse file that can contain the data for multiple tables, indexes, triggers, and/or other database objects;
receive a command to write database objects to the segments;
map the database objects to the segments in a database catalog, wherein the database catalog is a collection catalog, and the collection catalog is a system maintained catalog that contains metadata information for managing the collection file, wherein the instructions to map the database objects to the segments in the database catalog include instruction to add, in the database catalog, indices indicating object IDs of the database objects and object segment indices in relation to the object IDs in the logical sparse file; and
interface with a file system component to initialize storage medium space of the collection file for writing the database objects to the segments at the fixed offsets; and
writing the database objects to the segments at the fixed offsets.

8. The management component of claim 7, wherein the programming includes further instructions to initialize storage medium space for writing the data objects to segments starting at the fixed offsets after pre-allocating the segments in the logical sparse file and after receiving the command to writhe the database objects to the segments.

9. The management component of claim 7, wherein the instructions to pre-allocate the segments in the logical sparse file includes instructions to pre-allocate the segments in the logical sparse file without initializing the storage medium space for the segments.

10. The management component of claim 7, wherein the segments include subsegments fixed in size and contiguous at fixed subsegment offsets.

## Patentansprüche

1. Verfahren einer Datenbanksystem-Engine für Datenbankspeichervorgänge, das Verfahren umfassend:
Vorabzuweisen, in einer logischen Datei mit geringer Dichte, einer Vielzahl von Segmenten, die eine feste Größe aufweisen und an festen Versätzen zusammenhängend sind, wobei die Segmente zusammenhängende logische Adressbereiche fester Größe innerhalb einer Sammeldatei sind, wobei jedes Segment bei einem Versatz beginnt, der ein Vielfaches der Segmentgröße ist, die für die Sammeldatei konfigurierbar und festgelegt ist, und die Sammeldatei eine Datei mit geringer Dichte ist, welche die Daten für mehrere Tabellen, Indizes, Trigger und/oder andere Datenbankobjekte enthalten kann;
Empfangen eines Befehls zum Schreiben von Datenbankobjekten in die Segmente;
Zuordnen der Datenbankobjekte zu den Segmenten in einem Datenbankkatalog, wobei der Datenbankkatalog ein Sammelkatalog ist und der Sammelkatalog ein von dem System geführter Katalog ist, der Metadateninformationen zum Verwalten der Sammeldatei enthält, und die Datenbankobjekte in dem Datenbankkatalog den Segmenten unter Verwendung von Indizes zugeordnet werden, die Objektkennungen der Datenbankobjekte und Objektsegmentindizes in Bezug auf die Objektkennungen in dem Datenbankkatalog angeben;
Bilden einer Schnittstelle mit einem Dateisystem zum Initialisieren des Speichermediumspeicherplatzes der Sammeldatei zum Schreiben der Datenbankobjekte in die Segmente an den festen Versätzen; und
Schreiben der Datenbankobjekte in die Segmente an den festen Versätzen.

2. Verfahren nach Anspruch 1, wobei die Segmente in der logischen Datei mit geringer Dichte vorab zugewiesen werden, ohne den Speichermediumspeicherplatz für die Segmente zu initialisieren.

3. Verfahren nach Anspruch 2, ferner umfassend, nach einem Befehl zum Löschen der Datenbankobjekte oder zum Freigeben der Segmente, das Initialisieren auf null der Indizes, welche die Objektkennungen und die Objektsegmentindizes angeben.

4. Verfahren nach Anspruch 1, wobei die Segmente größer als die Datenbankobjekte sind und wobei die Datenbankobjekte bei den festen Versätzen der Segmente in der logischen Datei mit geringer Dichte beginnen.

5. Verfahren nach Anspruch 1, wobei die Datenbanksystem-Engine eine Anwendungsprogrammierschnittstelle ist, die mit dem Dateisystem zusammenwirkt, um Speichermediumvorgänge für die logische Datei mit geringer Dichte zu verwalten.

6. Verfahren nach Anspruch 1, ferner umfassend, nach Empfang eines Befehls zum Schreiben der Datenbankobjekte in die Segmente, das Initialisieren, in einer Dateisystem-Engine, des Speichermediumspeicherplatzes zum Schreiben der Datenobjekte in Segmente, beginnend bei den festen Versätzen.

7. Verwaltungskomponente für Datenbankspeichervorgänge, wobei die Verwaltungskomponente umfasst:
mindestens einen Prozessor; und
ein nichtflüchtiges computerlesbares Speichermedium, das die Programmierung zur Ausführung durch den mindestens einen Prozessor speichert, wobei die Programmierung Anweisungen enthält, die bei Ausführung durch den Prozessor diesen veranlassen:
vorab, in einer logischen Datei mit geringer Dichte, eine Vielzahl von Segmenten zuzuweisen, die eine feste Größe aufweisen und an festen Versätzen zusammenhängend sind, wobei die Segmente zusammenhängende logische Adressbereiche fester Größe innerhalb einer Sammeldatei sind, wobei jedes Segment bei einem Versatz beginnt, der ein Vielfaches der Segmentgröße ist, die für die Sammeldatei konfigurierbar und festgelegt ist, und die Sammeldatei eine Datei mit geringer Dichte ist, welche die Daten für mehrere Tabellen, Indizes, Trigger und/oder andere Datenbankobjekte enthalten kann;
einen Befehl zum Schreiben von Datenbankobjekten in die Segmente zu empfangen;
die Datenbankobjekte zu den Segmenten in einem Datenbankkatalog zuzuordnen, wobei der Datenbankkatalog ein Sammelkatalog ist und der Sammelkatalog ein von dem System geführter Katalog ist, der Metadateninformationen zum Verwalten der Sammeldatei enthält, wobei die Anweisungen zum Zuordnen der Datenbankobjekte zu den Segmenten in dem Datenbankkatalog eine Anweisung zum Zuordnen, in dem Datenbankkatalog, von Indizes enthalten, die Objektkennungen der Datenbankobjekte und Objektsegmentindizes in Bezug auf die Objektkennungen in der logischen Datei mit geringer Dichte angeben; und
eine Schnittstelle mit einer Dateisystemkomponente zum Initialisieren des Speichermediumspeicherplatz der Sammeldatei zum Schreiben der Datenbankobjekte in die Segmente an den festen Versätzen zu bilden; und
Schreiben der Datenbankobjekte in die Segmente an den festen Versätzen.

8. Verwaltungskomponente nach Anspruch 7, wobei die Programmierung weitere Anweisungen zum Initialisieren des Speichermediumspeicherplatzes zum Schreiben der Datenbankobjekte in die Segmente, beginnend bei den festen Versätzen, nachdem die Segmente in der logischen Datei mit geringer Dichte vorab zugeordnet wurden und nachdem der Befehl zum Schreiben der Datenbankobjekte in die Segmente empfangen wurde.

9. Verwaltungskomponente nach Anspruch 7, wobei die Anweisungen zum Vorabzuweisen der Segmente in der logischen Datei mit geringer Dichte Anweisungen enthalten, um die Segmente in der logischen Datei mit geringer Dichte vorab zuzuweisen, ohne den Speichermediumspeicherplatz für die Segmente zu initialisieren.

10. Verwaltungskomponente nach Anspruch 7, wobei die Segmente Untersegmente enthalten, die eine feste Größe aufweisen und an festen Versätzen der Untersegmente zusammenhängend sind.

## Revendications

1. Procédé réalisé par un moteur de système de base de données pour des opérations de stockage de base de données, le procédé comportant les étapes consistant à :
pré-attribuer, dans un fichier épars logique, une pluralité de segments de taille fixe et contigus au niveau de décalages fixes, les segments étant des plages d'adresses logiques contiguës de taille fixe à l'intérieur d'un fichier de collection, chaque segment commençant au niveau d'un décalage qui est un multiple de la taille de segment, qui est configurable et fixée pour le fichier de collection, et le fichier de collection étant un fichier épars qui peut contenir les données pour de multiples tables, indices, déclencheurs et/ou autres objets de base de données ;
recevoir une commande d'écriture d'objets de base de données dans les segments ;
associer les objets de base de données aux segments dans un catalogue de base de données, le catalogue de base de données étant un catalogue de collection, et le catalogue de collection étant un catalogue entretenu par le système qui contient des informations de métadonnées servant à gérer le fichier de collection, et les objets de base de données étant associés dans le catalogue de base de données aux segments en utilisant des indices indiquant des identifiants d'objets des objets de base de données et des indices de segments d'objets en relation avec les identifiants d'objets dans le catalogue de base de données ;
s'interfacer avec un système de fichiers pour initialiser un espace sur support de stockage du fichier de collection afin d'écrire les objets de base de données dans les segments au niveau des décalages fixes ; et
écrire les objets de base de données dans les segments au niveau des décalages fixes.

2. Procédé selon la revendication 1, les segments étant pré-attribués dans le fichier épars logique sans initialiser l'espace sur support de stockage pour les segments.

3. Procédé selon la revendication 2 comportant en outre l'étape consistant, suite à une commande de suppression des objets de base de données ou de libération des segments, à initialiser à zéro les indices indiquant les identifiants d'objets et les indices de segments d'objets.

4. Procédé selon la revendication 1, les segments étant de plus grande taille que les objets de base de données, et les objets de base de données commençant au niveau des décalages fixes des segments dans le fichier épars logique.

5. Procédé selon la revendication 1, le moteur de système de base de données étant une interface de programmation d'applications qui interagit avec le système de fichiers afin de gérer des opérations de support de stockage pour le fichier épars logique.

6. Procédé selon la revendication 1 comportant en outre l'étape consistant, suite à la réception d'une commande d'écriture des objets de base de données dans les segments, à initialiser, au niveau d'un moteur de système de fichiers, un espace sur support de stockage pour écrire les objets de données dans des segments commençant au niveau des décalages fixes.

7. Composant de gestion pour opérations de stockage de base de données, le composant de gestion comportant :
au moins un processeur ; et
un support de stockage non transitoire lisible par ordinateur conservant une programmation destinée à être exécutée par le ou les processeurs, la programmation comprenant des instructions qui, lorsqu'elles sont exécutées par le processeur, l'amènent à :
pré-attribuer, dans un fichier épars logique, une pluralité de segments de taille fixe et contigus au niveau de décalages fixes, les segments étant des plages d'adresses logiques contiguës de taille fixe à l'intérieur d'un fichier de collection, chaque segment commençant au niveau d'un décalage qui est un multiple de la taille de segment, qui est configurable et fixée pour le fichier de collection et le fichier de collection étant un fichier épars qui peut contenir les données pour de multiples tables, indices, déclencheurs et/ou autres objets de base de données ;
recevoir une commande d'écriture d'objets de base de données dans les segments ;
associer les objets de base de données aux segments dans un catalogue de base de données, le catalogue de base de données étant un catalogue de collection, et le catalogue de collection étant un catalogue entretenu par le système qui contient des informations de métadonnées servant à gérer le fichier de collection, les instructions pour associer les objets de base de données aux segments dans le catalogue de base de données comprenant des instructions d'ajout, dans le catalogue de base de données, d'indices indiquant des identifiants d'objets des objets de base de données et d'indices de segments d'objets en relation avec les identifiants d'objets dans le fichier épars logique ; et
s'interfacer avec un composant de système de fichiers pour initialiser un espace sur support de stockage du fichier de collection afin d'écrire les objets de base de données dans les segments au niveau des décalages fixes ; et
écrire les objets de base de données dans les segments au niveau des décalages fixes.

8. Composant de gestion selon la revendication 7, la programmation comprenant des instructions supplémentaires pour initialiser un espace sur support de stockage afin d'écrire les objets de données dans des segments commençant au niveau des décalages fixes après avoir pré-attribué les segments dans le fichier épars logique et après avoir reçu la commande d'écriture des objets de base de données dans les segments.

9. Composant de gestion selon la revendication 7, les instructions pour pré-attribuer les segments dans le fichier épars logique comprenant des instructions pour pré-attribuer les segments dans le fichier épars logique sans initialiser l'espace sur support de stockage pour les segments.

10. Composant de gestion selon la revendication 7, les segments comprenant des sous-segments de taille fixe et contigus au niveau de décalages de sous-segments fixes.
